# EUROPÄISCHE PATENTANMELDUNG

(11) **EP 2 926 905 A1**
(43) Veröffentlichungstag der Anmeldung: **07.10.2015**
(21) Anmeldenummer: 15159885.1
(22) Anmeldetag: 19.03.2015
(51) Int. Cl.: B01L 3/00

(54) **MIKROFLUIDISCHE VORRICHTUNG UND VERFAHREN ZUM ANALYSIEREN EINER PROBE BIOLOGISCHEN MATERIALS**

(30) Priorität: 01.04.2014 DE 102014206140
(71) Anmelder: Robert Bosch GmbH, 70442 Stuttgart (DE)
(72) Erfinder: Hoffmann, Jochen, 71229 Leonberg (DE)

(57) **Zusammenfassung**

Die Erfindung betrifft eine mikrofluidische Vorrichtung (100) zum Analysieren einer Probe biologischen Materials. Dabei weist die mikrofluidische Vorrichtung (100) Fluidleitmittel (110, 115, 120, 130, 135, 150, 155, 160, 180, 185) auf, die ausgebildet sind, um eine in die mikrofluidische Vorrichtung (100) eingebrachte Probe in eine Mehrzahl von Teilmengen aufzuteilen. Auch weist die mikrofluidische Vorrichtung (100) eine Mehrzahl von Reaktionskammern (140) auf, die mit den Fluidleitmitteln (110, 115, 120, 130, 135, 150, 155, 160, 180, 185) fluidisch verbunden sind, wobei jede der Reaktionskammern (140) einen Filter zum Herausfiltern von Zielzellen aus der Probe aufweist. Hierbei ist jede der Reaktionskammern (140) ausgebildet, um eine Teilmenge der Probe aufzunehmen. Dabei ist in jeder der Reaktionskammern (140) ein Ergebnis einer Reaktion zwischen einer für jede der Reaktionskammern (140) unterschiedlichen, zielzellenbezogenen Wirksubstanz und den Zielzellen der aufgenommenen Teilmenge der Probe erfassbar.

## Beschreibung

### Stand der Technik

Die vorliegende Erfindung bezieht sich auf eine mikrofluidische Vorrichtung zum Analysieren einer Probe biologischen Materials, ferner auf ein Verfahren zum Analysieren einer Probe biologischen Materials, zudem auf eine Vorrichtung zum Ausführen der Schritte des Verfahrens sowie auf ein entsprechendes Computerprogramm.

Ein Antibiogramm beispielsweise stellt ein mikrobiologisches Testverfahren dar, in dessen phänotypischer Bestimmungsvariante die Kirby-Bauer-Methode mit händischer Durchführung und typischen Inkubationszeiten von beispielsweise 16 bis 20 Stunden bekannt und üblich ist. Dabei wird eine zu untersuchende Probe auf ein Nährmedium gegeben. An bestimmten Stellen werden mit Antibiotika getränkte Plättchen in die Petrischale gelegt. Ein so appliziertes Antibiotikum wird herausgelöst und kann von Bakterien in der Probe aufgenommen werden. Je weiter es vom Plättchen wegdiffundiert, desto geringer wird eine Konzentration. In einem definierten Abstand von dem Plättchen ist eine Konzentration erreicht, bei der ein Keim trotz geringer Konzentration des Antibiotikums noch wachsen kann. Hier spricht man von der minimalen Hemmkonzentration. Die US 2009/0311717 A1 offenbart eine mikrofluidische Vorrichtung.

### Offenbarung der Erfindung

Vor diesem Hintergrund werden mit dem hier vorgestellten Ansatz eine mikrofluidische Vorrichtung zum Analysieren einer Probe biologischen Materials, ein Verfahren zum Analysieren einer Probe biologischen Materials, weiterhin eine Vorrichtung, die dieses Verfahren verwendet, sowie schließlich ein entsprechendes Computerprogramm gemäß den Hauptansprüchen vorgestellt. Vorteilhafte Ausgestaltungen ergeben sich aus den jeweiligen Unteransprüchen und der nachfolgenden Beschreibung.

Gemäß Ausführungsformen der Erfindung können insbesondere mikrofluidische Strukturen bzw. Prozessabläufe für eine automatisierte Durchführung einer Probenanalyse, die mehrere parallele Reaktionen von Zielzellen der Probe mit unterschiedlichen Wirksubstanzen erfordert, insbesondere eines Antibiogramms, in einem LoC-System (LoC = Lab on Chip) bzw. Chiplabor-System bereitgestellt werden. So kann insbesondere eine mikrofluidische Verteilerstruktur vorgesehen sein, die eine Probe bzw. Probenlösung auf verschiedene Reaktionskammern bzw. Filterkammern verteilen kann. In den Reaktionskammern können Wirksubstanzen auf ihre Wirksamkeit bezüglich der Zielzellen überprüft werden. Die Probe durchströmt dabei im Falle eines Antibiogramms als Probenanalyse einen Bakterienfilter, sodass Bakterien aus der Probe als Zielzellen beispielsweise auf Filtermembranen fixiert werden können. Danach können die Filter der verschiedenen Reaktionskammern mit Mischungen aus Nährmedium und unterschiedlichen Antibiotika als Wirksubstanzen inkubiert werden. Anhand von Wachstumsraten der Bakterien in den verschiedenen Reaktionskammern kann eine Wirksamkeit unterschiedlicher Antibiotika auf die Bakterien aus der Probe bestimmt werden.

Vorteilhafterweise kann gemäß Ausführungsformen der Erfindung insbesondere eine automatisierte LoC-basierte Methode bereitgestellt werden, mittels derer eine Wirksamkeit von Wirksubstanzen, beispielsweise Antibiotika, individuell, zuverlässig und schnell bestimmt werden kann. Zusätzlich zu einem solchen Geschwindigkeitsvorteil, wobei eine Probenanalyse beispielsweise innerhalb einer Stunde erfolgen kann, können Ausführungsformen der Erfindung auch flexibel eingesetzt werden, um eine Vielfalt von möglichen Zielzellen zu untersuchen, wobei insbesondere ein Einsatz bei MRSA (Methicillin-resistenter Staphylococcus aureus), Sepsis oder dergleichen möglich ist. So weisen Ausführungsformen der Erfindung einen lokalen Vorteil dahin gehend auf, dass eine erhöhte Wirksamkeit einer Behandlung bzw. ein schnellerer Therapieerfolg ermöglicht werden können. Auch weisen Ausführungsformen der Erfindung einen globalen Vorteil einer Reduktion von multiresistenten Zielzellenstämmen, z. B. Bakterienstämmen auf. So kann beispielsweise verhindert werden, dass durch verstärkten Einsatz von Breitbandantibiotika ohne vorherigen Wirksamkeitstest neue Antibiotikaresistenzen entstehen, wobei eine alleinige genetische Bestimmung mutierenden Stämmen hinterherläuft. Ein Antibiogramm kann selbst hier eine diagnostisch wichtige Information für die Wahl eines wirksamen Antibiotikums liefern. Basierend auf Analyseergebnissen gemäß Ausführungsformen der Erfindung kann indirekt bzw. ohne genetisches Profiling beispielsweise auf eine Identität von Zielzellen bzw. einen Stamm eines Bakteriums rückgeschlossen werden, beispielsweise wenn in der Analyse bestimmt wurde, dass Zielzellen bzw. eine Bakterienkolonie gegen bestimmte Antibiotika als Wirksubstanzen resistent ist. Somit kann auf genetisches Profiling vorteilhaft verzichtet werden, wodurch eine Vielzahl komplexer LoC-Einheitsoperationen, wie beispielsweise Lyse, Aufreinigung, Amplifikation, Mikroarray-Nachweis und dergleichen, eingespart werden können.

Es wird eine mikrofluidische Vorrichtung zum Analysieren einer Probe biologischen Materials vorgestellt, wobei die mikrofluidische Vorrichtung folgende Merkmale aufweist:
Fluidleitmittel, die ausgebildet sind, um eine in die mikrofluidische Vorrichtung eingebrachte Probe in eine Mehrzahl von Teilmengen aufzuteilen; und
eine Mehrzahl von Reaktionskammern, die mit den Fluidleitmitteln fluidisch verbunden sind, wobei jede der Reaktionskammern einen Filter zum Herausfiltern von Zielzellen aus der Probe aufweist, wobei jede der Reaktionskammern ausgebildet ist, um eine Teilmenge der Probe aufzunehmen, wobei in jeder der Reaktionskammern ein Ergebnis einer Reaktion zwischen einer für jede der Reaktionskammern unterschiedlichen, zielzellenbezogenen Wirksubstanz und den Zielzellen der aufgenommenen Teilmenge der Probe erfassbar ist.

Die mikrofluidische Vorrichtung kann beispielsweise in Verbindung mit analytischen Systemen, insbesondere für mikrofluidische Lab-on-Chip-Systeme zur Umweltanalytik oder medizinischen Diagnostik verwendet werden. Bei der mikrofluidischen Vorrichtung kann es sich um ein mikrofluidisches System bzw. eine analytische Vorrichtung handeln, insbesondere ein mikrofluidisches Lab-on-Chip bzw. Chiplabor zur medizinischen Diagnostik, mikrobiologischen Diagnostik oder Umweltanalytik. Die Probe kann eine zu analysierende Flüssigkeit, typischerweise eine flüssige oder verflüssigte Patientenprobe, z. B. Blut, Urin, Stuhl, Sputum, Liquor, Lavage, ein ausgespülter Abstrich oder eine verflüssigte Gewebeprobe, oder eine Probe eines nichtmenschlichen Materials sein. In der Probe enthaltene Zielzellen können beispielsweise pathogene Zellen bzw. Pathogene, z. B. Mikroorganismen, wie z. B. Bakterien oder Pilze, menschliche Zellen, z. B. Blutzellen oder dergleichen, oder tierische Zellen umfassen. Die Fluidleitmittel können Fluidkanäle bzw. Fluidleitungen, Ventile und/oder zumindest eine Fördereinrichtung umfassen. In jeder Reaktionskammer kann eine Reaktion zwischen einer zielzellenbezogenen Wirksubstanz und den Zielzellen der in der jeweiligen Reaktionskammer aufgenommenen Teilmenge der Probe durchführbar sein. Bei der Reaktion kann es sich insbesondere um ein Antibiogramm oder dergleichen handeln. Die Wirksubstanzen können hinsichtlich ihrer Art, Identität und/oder Konzentration unterschiedlich sein. Als Wirksubstanzen können beispielsweise Antibiotika, Antimykotika oder dergleichen zum Einsatz kommen. Die mikrofluidische Vorrichtung kann auch ausgebildet sein, um eine Lyse, insbesondere eine selektive Lyse, der Probe durchzuführen oder zu ermöglichen, das Herausfiltern der Zielzellen zu erleichtern oder zu ermöglichen.

Gemäß einer Ausführungsform kann in jeder der Reaktionskammern eine unterschiedliche Wirksubstanz vorlegbar oder vorgelegt sein. Dabei kann die Wirksubstanz mit einem Trägermaterial kombiniert sein, wobei eine Trennung der Wirksubstanz von dem Trägermaterial in den Reaktionskammern ermöglicht ist. Das Trägermaterial kann hierbei in einem festen Zustand oder als eine hochviskose Flüssigkeit vorliegen. Eine solche Ausführungsform bietet den Vorteil, dass eine Analyse der Probe weiter vereinfacht und beschleunigt werden kann, da die Wirksubstanzen bereits in den Reaktionskammern vorgelagert sind und nur noch die Teilmengen der Probe auf die Reaktionskammern verteilt zu werden brauchen.

Alternativ oder zusätzlich kann die mikrofluidische Vorrichtung eine Mehrzahl von Speicherkammern zum Speichern unterschiedlicher Wirksubstanzen aufweisen. Hierbei können die Speicherkammern fluidisch mittels der Fluidleitmittel mit der Mehrzahl von Reaktionskammern verbunden sein. Dabei können die Fluidleitmittel ausgebildet sein, um in jede der Reaktionskammern eine der unterschiedlichen Wirksubstanzen aus den Speicherkammern einzuleiten. Hierbei kann in jeder der Speicherkammern eine unterschiedliche Wirksubstanz vorgelegt oder vorlegbar sein. Die Wirksubstanzen können in flüssiger Form bzw. in einem flüssigen Trägermaterial in den Speicherkammern gespeichert sein. Es können auch weitere Substanzen in den Speicherkammern speicherbar und in die Reaktionskammern einleitbar sein. Eine solche Ausführungsform bietet den Vorteil, dass die Wirksubstanzen auf einfache Weise und/oder bedarfsgerecht flexibel anpassbar die Reaktionskammern eingeleitet werden können.

Auch können hierbei die Fluidleitmittel eine Mehrzahl von Sammelkanälen und eine Mehrzahl von Zufuhrventilen aufweisen. Dabei kann jede der Speicherkammern mittels eines Sammelkanals fluidisch mit der Mehrzahl von Reaktionskammern verbunden sein, wobei in jedem Sammelkanal ein Zufuhrventil angeordnet sein kann. Eine solche Ausführungsform bietet den Vorteil, dass ein zuverlässiges Speichern und Entnehmen von Wirksubstanzen ohne Vermischung derselben ermöglicht werden kann.

Ferner können die Fluidleitmittel einen Probeneinlasskanal mit einem Einlassventil, eine Pumpkammer, eine Mehrzahl von Verteilkanälen mit einer Mehrzahl von ersten Pumpventilen, eine Mehrzahl von Abfuhrkanälen mit einer Mehrzahl von zweiten Pumpventilen und eine Abfallkammer aufweisen. Dabei kann der Probeneinlasskanal fluidisch mit der Pumpkammer verbunden sein. Auch können die Pumpkammer und die Reaktionskammern mittels der Mehrzahl von Verteilkanälen fluidisch miteinander verbunden sein. Zudem können die Reaktionskammern und die Abfallkammer mittels der Mehrzahl von Abfuhrkanälen fluidisch miteinander verbunden sein. Eine solche Ausführungsform bietet den Vorteil, dass eine einfache und zuverlässige Aufteilung der Probe sowie Entsorgung eines zielzellenfreien Probenanteils ermöglicht werden kann.

Zudem kann jede der Reaktionskammern ausgebildet oder ausgeformt sein, um das Ergebnis der Reaktion zwischen der Wirksubstanz und den Zielzellen der aufgenommenen Teilmenge der Probe optisch und/oder elektrisch erfassbar zu machen. Hierbei kann jede der Reaktionskammern zumindest einen optisch durchlässigen Abschnitt aufweisen. Ferner kann ein Vitalitätsfarbstoff in die Reaktionskammern vorlagerbar oder einleitbar sein. Auch kann jede der Reaktionskammern an dem Filter angebrachte Elektroden zur Impedanzmessung aufweisen. Der Mehrzahl von Reaktionskammern können Erfassungsmittel zum Erfassen des Ergebnisses der Reaktion zugeordnet sein. Eine solche Ausführungsform bietet den Vorteil, dass die Probe auf einfache, schnelle und zuverlässige Weise analysiert bzw. ausgewertet werden kann.

Es wird auch ein Verfahren zum Analysieren einer Probe biologischen Materials vorgestellt, wobei das Verfahren in Verbindung mit einer mikrofluidischen Vorrichtung ausführbar ist, die Fluidleitmittel und eine Mehrzahl von fluidisch mit den Fluidleitmitteln verbundene Reaktionskammern mit Filtern aufweist, wobei das Verfahren folgende Schritte aufweist:
Aufteilen einer in die mikrofluidische Vorrichtung eingebrachten Probe in eine Mehrzahl von Teilmengen mittels der Fluidleitmittel auf die Mehrzahl von Reaktionskammern, wobei jede der Teilmengen der Probe auf eine der Reaktionskammern verteilt wird;
Herausfiltern von Zielzellen aus der Probe mittels der Filter der Reaktionskammern; und
Durchführen einer Reaktion zwischen einer für jede der Reaktionskammern unterschiedlichen, zielzellenbezogenen Wirksubstanz und den Zielzellen der Probe in jeder der Reaktionskammern, um in jeder der Reaktionskammern ein Ergebnis der Reaktion zwischen der Wirksubstanz und den Zielzellen der Probe erfassbar zu machen.

Das Verfahren kann in Verbindung mit einer Ausführungsform der vorstehend genannten mikrofluidischen Vorrichtung vorteilhaft ausgeführt werden, um eine Probe biologischen Materials zu analysieren. Der Schritt des Aufteilens, der Schritt des Herausfilterns und zusätzlich oder alternativ der Schritt des Durchführens können durch Ansteuern von Fluidleitmitteln, beispielsweise zumindest eines Ventils und zusätzlich oder alternativ zumindest einer Fördereinrichtung, ausgeführt werden. Dabei können Fluidleitmittel, beispielsweise die Ventile und zusätzlich oder alternativ die zumindest eine Fördereinrichtung, Schnittstellen aufweisen, die ausgebildet sind, um Ansteuersignale zu empfangen. Im Schritt des Aufteilens und im Schritt des Herausfilterns kann die Probe mittels der Fluidleitmittel innerhalb der mikrofluidischen Vorrichtung gefördert werden. Im Schritt des Durchführens können gemäß einer Ausführungsform die Wirksubstanzen mittels der Fluidleitmittel in die Reaktionskammern gefördert werden. Auch kann das Verfahren vor dem Schritt des Herausfilterns einen Schritt des Lysierens der Probe aufweisen, wobei die Zielzellen intakt bleiben.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung und/oder Ansteuerung der Schritte des Verfahrens nach einer der vorstehend beschriebenen Ausführungsformen verwendet wird, insbesondere wenn das Programmprodukt auf einem Computer oder einer Vorrichtung ausgeführt wird.

Der hier vorgestellte Ansatz wird nachstehend anhand der beigefügten Zeichnungen beispielhaft näher erläutert. Es zeigen:
Fig. 1 eine schematische Darstellung einer mikrofluidischen Vorrichtung gemäß einem Ausführungsbeispiel der vorliegenden Erfindung;
Fig. 2 eine schematische Darstellung einer mikrofluidischen Vorrichtung gemäß einem Ausführungsbeispiel der vorliegenden Erfindung;
Fig. 3 eine schematische Schnittdarstellung eines Teils einer mikrofluidischen Vorrichtung gemäß einem Ausführungsbeispiel der vorliegenden Erfindung;
Figuren 4 und 5 Darstellungen von Filtern einer mikrofluidischen Vorrichtung gemäß Ausführungsbeispielen der vorliegenden Erfindung; und
Fig. 6 ein Ablaufdiagramm eines Verfahrens gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

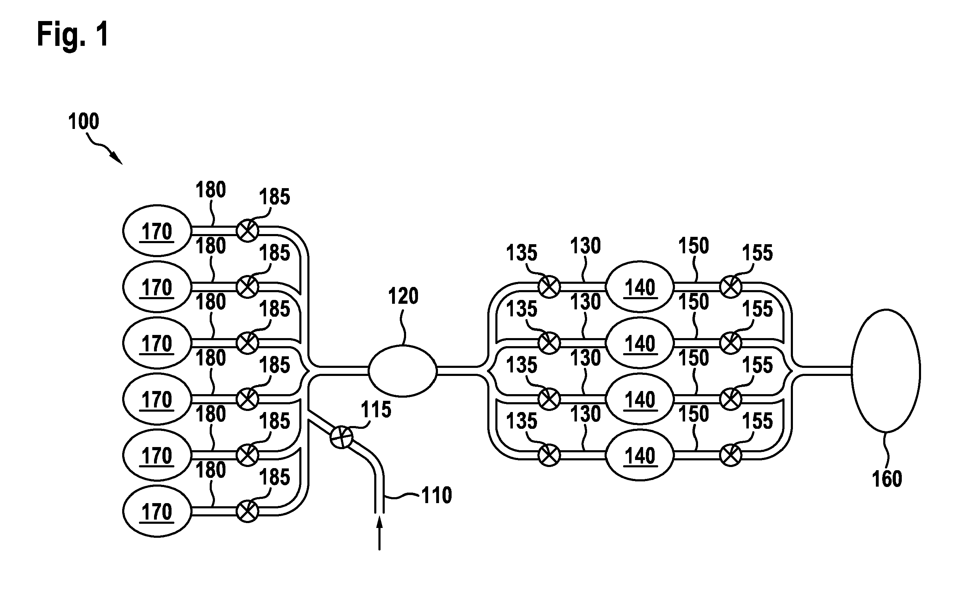

Fig. 1 zeigt eine schematische Darstellung einer mikrofluidischen Vorrichtung 100 zum Analysieren einer Probe biologischen Materials gemäß einem Ausführungsbeispiel der vorliegenden Erfindung. Die mikrofluidische Vorrichtung 100 ist hierbei als ein mikrofluidisches Lab-on-Chip (LoC) bzw. Chiplabor zur medizinischen Diagnostik, mikrobiologischen Diagnostik oder Umweltanalytik ausgeführt. Insbesondere ist die mikrofluidische Vorrichtung 100 ausgebildet, um zum Analysieren der Probe ein Antibiogramm bezüglich Zielzellen der Probe und unterschiedlichen Wirksubstanzen zu erstellen. Gezeigt sind von der mikrofluidischen Vorrichtung 100 hierbei ein Probeneinlasskanal 110, ein Einlassventil 115, eine Pumpkammer 120, eine Mehrzahl von Verteilkanälen 130, eine Mehrzahl von ersten Pumpventilen 135, eine Mehrzahl von Reaktionskammern 140, eine Mehrzahl von Abfuhrkanälen 150, eine Mehrzahl von zweiten Pumpventilen 155, eine Abfallkammer 160, eine Mehrzahl von Speicherkammern 170, eine Mehrzahl von Sammelkanälen 180 und eine Mehrzahl von Zufuhrventilen 185.

Der Probeneinlasskanal 110, das Einlassventil 115, die Pumpkammer 120, die Mehrzahl von Verteilkanälen 130, die Mehrzahl von ersten Pumpventilen 135, die Mehrzahl von Abfuhrkanälen 150, die Mehrzahl von zweiten Pumpventilen 155, die Mehrzahl von Sammelkanälen 180 und die Mehrzahl von Zufuhrventilen 185 repräsentieren dabei Fluidleitmittel der mikrofluidischen Vorrichtung 100. Die Fluidleitmittel sind ausgebildet, um eine in die mikrofluidische Vorrichtung 100 eingebrachte Probe in eine Mehrzahl von Teilmengen aufzuteilen. Auch sind die Fluidleitmittel ausgebildet, um die Probe sowie Wirksubstanzen innerhalb der mikrofluidischen Vorrichtung 100 zu fördern.

Über den Probeneinlasskanal 110 ist eine Zielzellen enthaltende Probe biologischen Materials in die mikrofluidische Vorrichtung 100 einbringbar. In dem Probeneinlasskanal 110 ist das Einlassventil 115 angeordnet. Das Einlassventil 115 ist ausgebildet, um den Probeneinlasskanal 110 umschaltbar freizugeben bzw. zu blockieren. Der Probeneinlasskanal 110 ist fluidisch mit der Pumpkammer 120 verbunden. Gemäß dem in Fig. 1 dargestellten Ausführungsbeispiel der vorliegenden Erfindung mündet der Probeneinlasskanal 110 benachbarte zu der Pumpkammer 120 in einen der Sammelkanäle 180.

Die Mehrzahl von Speicherkammern 170 sind zum Speichern unterschiedlicher Wirksubstanzen ausgebildet. In jeder Speicherkammer 170 ist eine unterschiedliche Wirksubstanz speicherbar. Die Speicherkammern 170 sind mittels der Mehrzahl von Sammelkanälen 180 fluidisch mit der Pumpkammer 120 verbunden. Dabei ist jede der Speicherkammern 170 mittels eines Sammelkanals 180 fluidisch mit der Pumpkammer 120 verbunden. In jedem Sammelkanal 180 ist hierbei ein Zufuhrventil 185 angeordnet. Die Zufuhrventile 185 sind ausgebildet, um die Sammelkanäle 180 umschaltbar einzeln freizugeben bzw. zu blockieren.

Die Pumpkammer 120 repräsentiert eine Fördereinrichtung der Fluidleitmittel der mikrofluidischen Vorrichtung 100. Dabei münden die Sammelkanäle 180 und der Probeneinlasskanal 110 in die Pumpkammer 120. Gemäß dem in Fig. 1 dargestellten Ausführungsbeispiel der vorliegenden Erfindung vereinigen sich hierbei die Sammelkanäle 180 und der Probeneinlasskanal 110 benachbart zu der Pumpkammer 120. Aus der Pumpkammer 120 treten die Verteilkanäle 130 aus. Somit ist die Pumpkammer 120 fluidisch zwischen die Sammelkanäle 180 sowie den Probeneinlasskanal 110 einerseits und die Verteilkanäle 130 andererseits geschaltet. Die Verteilkanäle 130 treten in einem gemeinsamen Kanalabschnitt aus der Pumpkammer 120 aus und verzweigen sich benachbart zu der Pumpkammer 120 in die Mehrzahl von Verteilkanälen 130. In jedem der Verteilkanäle 130 ist eines der Mehrzahl von ersten Pumpventilen 135 angeordnet. Die ersten Pumpventile 135 sind ausgebildet, um die Verteilkanäle 130 umschaltbar einzeln freizugeben bzw. zu blockieren.

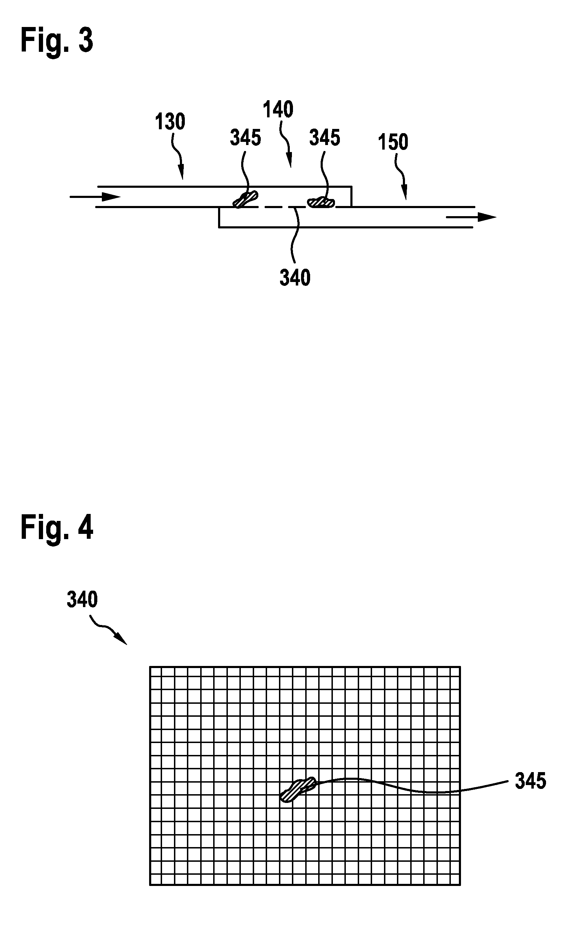

Die Mehrzahl von Reaktionskammern 140 sind mittels der Mehrzahl von Verteilkanälen 130 fluidisch mit der Pumpkammer 120 verbunden. Hierbei ist jede Reaktionskammer 140 mittels eines Verteilerkanals 130 fluidisch mit der Pumpkammer 120 verbunden. Jede der Reaktionskammern 140 ist ausgebildet, um eine Teilmenge der Probe aufzunehmen. Auch wenn es in Fig. 1 aus Platzgründen nicht dargestellt ist, sondern in Fig. 3 gezeigt ist, weist jede der Reaktionskammern 140 einen Filter zum Herausfiltern von Zielzellen aus der aufgenommenen Teilmenge der Probe auf. Jede der Reaktionskammern 140 ist somit ausgebildet, um bei Durchströmung der Reaktionskammer 140 mit einer Teilmenge der Probe mittels des Filters die Zielzellen aus der Teilmenge der Probe herauszufiltern. Dabei sind die Mehrzahl von Reaktionskammern 140 fluidisch zwischen die Mehrzahl von Verteilkanälen 130 und die Mehrzahl von Abfuhrkanälen 150 geschaltet.

Mittels der Mehrzahl von Abfuhrkanälen 150 sind die Mehrzahl der Reaktionskammern 140 und die Abfallkammer 160 fluidisch miteinander verbunden. Hierbei ist jede Reaktionskammer 140 mittels eines Abfuhrkanals 150 fluidisch mit der Abfallkammer 160 verbunden. In jedem Abfuhrkanal 150 ist eines der Mehrzahl von zweiten Pumpventilen 155 angeordnet. Die zweiten Pumpventile 155 sind ausgebildet, um die Abfuhrkanäle 150 umschaltbar einzeln freizugeben bzw. zu blockieren. Die Abfallkammer 160 ist ausgebildet, um im Wesentlichen zielzellenfreie Probenanteile, aus denen die Zielzellen herausgefiltert sind, aus den Reaktionskammern 140 aufzunehmen.

Somit sind anders ausgedrückt die Speicherkammern 170 mittels der Fluidleitmittel, hierbei der Sammelkanäle 180, der Pumpkammer 120 und der Verteilkanäle 130, fluidisch mit den Reaktionskammern 140 verbunden. Dabei sind die Fluidleitmittel ausgebildet, um in jede der Reaktionskammern 140 eine der unterschiedlichen Wirksubstanzen aus einer der Speicherkammern 170 einzuleiten. In jeder Reaktionskammer 140 ist eine Reaktion zwischen einer für jede der Reaktionskammern 140 unterschiedlichen, zielzellenbezogenen Wirksubstanz und den herausgefilterten Zielzellen der in die jeweilige Reaktionskammer 140 aufgenommenen Teilmenge der Probe durchführbar.

Auch ist in jeder der Reaktionskammern 140 ein Ergebnis der Reaktion zwischen der Wirksubstanz und den Zielzellen der in die jeweilige Reaktionskammer 140 aufgenommenen Teilmenge der Probe erfassbar. Gemäß einem Ausführungsbeispiel ist jede der Reaktionskammern 140 ausgebildet, um das Ergebnis der Reaktion zwischen der Wirksubstanz und den Zielzellen der aufgenommenen Teilmenge der Probe optisch und zusätzlich oder alternativ elektrisch erfassbar zu machen. Hierbei kann jede der Reaktionskammern 140 zumindest einen optisch durchlässigen Abschnitt aufweisen, kann ein Vitalitätsfarbstoff in die Reaktionskammern 140 vorlagerbar bzw. einleitbar sein oder kann jede der Reaktionskammern 140 an dem Filter angebrachte Elektroden zur Impedanzmessung aufweisen. Auch kann die mikrofluidische Vorrichtung 100 dazu der Mehrzahl von Reaktionskammern 140 zugeordnete Erfassungsmittel zum Erfassen des Ergebnisses der Reaktion aufweisen. Anders ausgedrückt zeigt Fig. 1 eine Aufsicht eines Ausführungsbeispiels einer mikrofluidischen Vorrichtung 100 bzw. eines mikrofluidischen Chips, wobei als Wirksubstanzen in den Speicherkammern 170 Antibiotika flüssig bzw. in Flüssigform vorlagerbar oder vorgelagert sind. Die mikrofluidische Vorrichtung 100 umfasst die Pumpkammer 120 sowie das Einlassventil 115, die Mehrzahl von ersten Pumpventilen 135 und die Mehrzahl von zweiten Pumpventilen 155, die ausgebildet sind, um eine Bakterien-haltige Probe über den Probeneinlasskanal 110 bzw. ein Inlet auf die Reaktionskammern 140 bzw. Filterkammern zu verteilen. In einem ersten Prozessschritt wird eine vorprozessierte Probenlösung durch die Reaktionskammern 140 gespült. Poren der Filter in den Reaktionskammern 140 sind gemäß dem in Fig. 1 dargestellten Ausführungsbeispiel so dimensioniert, dass Bakterien herausgefiltert werden. Die Probe kann beispielsweise mit einer geeigneten Einrichtung vorprozessiert werden, um humane Zellen selektiv gegenüber Bakterien zu lysieren bzw. aufzuschließen. Der restliche Überschuss der Probe wird in die Abfallkammer 160 geleitet. Anschließend können die Reaktionskammern 140 gewaschen werden, um Überreste humaner Zellen zu entfernen. In einem nächsten Schritt wird jede der Reaktionskammern 140 mit einer Mischung aus einem Bakterien-Nährmedium, das beispielsweise über den Probeneinlasskanal 110 zuführbar ist, und einem Antibiotikum als Wirksubstanz aus einer der Speicherkammern 170 geflutet und durch Schließen der Pumpventile 135 und 155 in den Reaktionskammern 140 gehalten. Eine Wirksamkeit der Antibiotika auf einen Organismus ist anhand einer Wachstumsrate der Bakterien auf den Filtern in den Reaktionskammern 140 in Echtzeit oder per Endpunktmessung erfassbar.

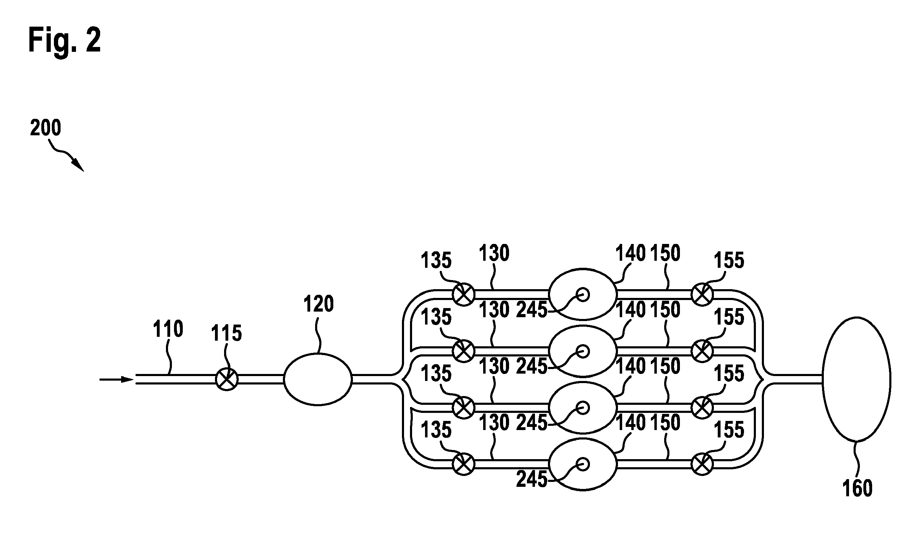

Fig. 2 zeigt eine schematische Darstellung einer mikrofluidischen Vorrichtung 200 gemäß einem Ausführungsbeispiel der vorliegenden Erfindung. Dabei entspricht die mikrofluidische Vorrichtung 200 der mikrofluidischen Vorrichtung aus Fig. 1 mit der Ausnahme, dass die mikrofluidische Vorrichtung 200 gemäß dem in Fig. 2 dargestellten Ausführungsbeispiel keine Speicherkammern aufweist und Wirksubstanzen 245 in den Reaktionskammern 140 in Festform vorgelegt sind. Somit sind in Fig. 2 von der mikrofluidischen Vorrichtung 200 hierbei der Probeneinlasskanal 110, das Einlassventil 115, die Pumpkammer 120, die Mehrzahl von Verteilkanälen 130, die Mehrzahl von ersten Pumpventilen 135, die Mehrzahl von Reaktionskammern 140, die Mehrzahl von Abfuhrkanälen 150, die Mehrzahl von zweiten Pumpventilen 155, die Abfallkammer 160 und die Wirksubstanzen 245 gezeigt. Der Probeneinlasskanal 110 mündet hierbei direkt in die Pumpkammer 120. In jeder der Reaktionskammern 140 ist eine unterschiedliche Wirksubstanz 245 vorgelegt.

Anders ausgedrückt zeigt Fig. 2 eine Aufsicht eines Ausführungsbeispiels einer mikrofluidischen Vorrichtung 200 bzw. eines mikrofluidischen Chips, wobei als Wirksubstanzen 245 in den Reaktionskammern 140 Antibiotika in Festform vorgelagert sind. Die mikrofluidische Vorrichtung 100 umfasst die Pumpkammer 120 sowie das Einlassventil 115, die Mehrzahl von ersten Pumpventilen 135 und die Mehrzahl von zweiten Pumpventilen 155, die ausgebildet sind, um eine Bakterien-haltige Probe über den Probeneinlasskanal 110 bzw. ein Inlet auf die Reaktionskammern 140 bzw. Filterkammern zu verteilen. Jede Reaktionskammer 140 enthält eine Matrix, beispielsweise einen Filter bzw. ein Filterplättchen, mit einem Antibiotikum in Festform. In einem ersten Prozessschritt wird eine vorprozessierte Probenlösung durch die Reaktionskammern 140 gespült. Die Probe kann beispielsweise mit einer geeigneten Einrichtung vorprozessiert werden, um humane Zellen selektiv gegenüber Bakterien zu lysieren bzw. aufzuschließen. Poren der Filter in den Reaktionskammern 140 sind gemäß dem in Fig. 1 dargestellten Ausführungsbeispiel so dimensioniert, dass Bakterien herausgefiltert werden. Der restliche Überschuss der Probe wird in die Abfallkammer 160 geleitet. Nach einem Spülen der Reaktionskammern 140, um Zellreste humaner Zellen zu entfernen, wird in einem nächsten Schritt jede der Reaktionskammern 140 mit einem Bakterien-Wachstumsmedium gefüllt, das beispielsweise über den Probeneinlasskanal 110 zuführbar ist. Die beispielsweise in Plättchen vorgelagerten Antibiotika werden von dem Bakterien-Wachstumsmedium aufgenommen. Die von den Pumpventilen 135 und 155 abgeschlossenen Reaktionskammern 140 enthalten nun die auf den Filtern fixierten Bakterien und das Wachstumsmedium mit einem gelösten Antibiotikum. Eine Wirksamkeit der Antibiotika auf einen Organismus ist anhand einer Wachstumsrate der Bakterien auf den Filtern in den Reaktionskammern 140 in Echtzeit oder per Endpunkt messbar.

Fig. 3 zeigt eine schematische Schnittdarstellung eines Teils einer mikrofluidischen Vorrichtung gemäß einem Ausführungsbeispiel der vorliegenden Erfindung. Bei dem Teil der mikrofluidischen Vorrichtung handelt es sich beispielsweise um einen Teil der mikrofluidischen Vorrichtung 100 aus Fig. 1 bzw. der mikrofluidischen Vorrichtung 200 aus Fig. 2. Gezeigt sind hierbei ein Teil eines Verteilkanals 130, eine Reaktionskammer 140, einen Teil eines Abfuhrkanals 150, ein in der Reaktionskammer 140 angeordneter Filter 340 sowie herausgefilterte Zielzellen 345, bei denen es sich hierbei zum Beispiel um Bakterien handelt. Der Filter 340 ist ausgebildet, um für die Zielzellen 340 undurchlässig zu sein. Die Reaktionskammer 140 ist durch den Filter 340 in einen verteilkanalseitigen Abschnitt und einen abfuhrkanalseitigen Abschnitt unterteilt. Die herausgefilterten Zielzellen 345 sind in dem verteilkanalseitigen Abschnitt in Anlage gegen den Filter 340 angeordnet.

Fig. 4 zeigt eine Darstellung eines Filters 340 einer mikrofluidischen Vorrichtung gemäß einem Ausführungsbeispiel der vorliegenden Erfindung. Bei der mikrofluidischen Vorrichtung handelt es sich beispielsweise um die mikrofluidische Vorrichtung 100 aus Fig. 1 bzw. die mikrofluidische Vorrichtung 200 aus Fig. 2. Bei dem Filter 340 handelt es sich beispielsweise um den Filter aus Fig. 3. Anders ausgedrückt zeigt Fig. 4 eine Aufsicht auf eine Reaktionskammer bzw. Filterkammer mit dem Filter 340. An dem Filter 340 ist beispielhaft eine herausgefilterte Zielzelle 345 angeordnet. In Fig. 4 ist hierbei schematisch ein Bakterium als die Zielzelle 345 auf dem Filter 340 gezeigt, beispielsweise vor einer Inkubation mit einem Antibiotikum als Wirksubstanz.

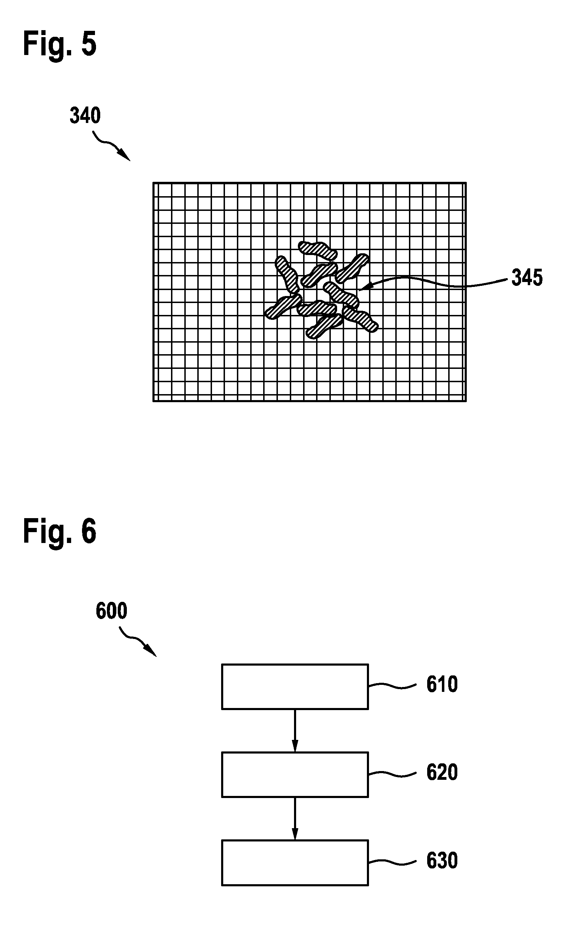

Fig. 5 zeigt eine Darstellung eines Filters 340 einer mikrofluidischen Vorrichtung gemäß einem Ausführungsbeispiel der vorliegenden Erfindung. Bei der mikrofluidischen Vorrichtung handelt es sich beispielsweise um die mikrofluidische Vorrichtung 100 aus Fig. 1 bzw. die mikrofluidische Vorrichtung 200 aus Fig. 2. Bei dem Filter 340 handelt es sich beispielsweise um den Filter aus Fig. 3. Die Darstellung Fig. 5 entspricht der Darstellung aus Fig. 4 mit der Ausnahme, dass auf dem Filter 340 hierbei in Fig. 5 eine Mehrzahl von Zielzellen 345 angeordnet sind. Ein in Fig. 5 gezeigter Zustand in einer Reaktionskammer mit der Mehrzahl von Zielzellen 345 auf dem Filter 340 entspricht beispielsweise einem erfassbaren Ergebnis einer Reaktion in der Reaktionskammer. Anders ausgedrückt repräsentiert die Mehrzahl von Zielzellen 345 eine Bakterienkultur, die beispielsweise resistent gegen ein bestimmtes Antibiotikum ist, das als Wirksubstanz in der Reaktionskammer verwendet wurde.

Fig. 6 zeigt ein Ablaufdiagramm eines Verfahrens 600 zum Analysieren einer Probe biologischen Materials gemäß einem Ausführungsbeispiel der vorliegenden Erfindung. Dabei ist das Verfahren 600 in Verbindung mit einer mikrofluidischen Vorrichtung ausführbar, die Fluidleitmittel und eine Mehrzahl von fluidisch mit den Fluidleitmitteln verbundene Reaktionskammern mit Filtern aufweist. Anders ausgedrückt ist das Verfahren 600 in Verbindung mit einer mikrofluidischen Vorrichtung wie der mikrofluidischen Vorrichtung aus Fig. 1 bzw. Fig. 2 ausführbar. Insbesondere ist das Verfahren 600 ausführbar, um zum Analysieren der Probe ein Antibiogramm bezüglich Zielzellen der Probe und unterschiedlichen Wirksubstanzen zu erstellen.

Das Verfahren 600 weist einen Schritt 610 des Aufteilens einer in die mikrofluidische Vorrichtung eingebrachten Probe in eine Mehrzahl von Teilmengen mittels der Fluidleitmittel auf die Mehrzahl von Reaktionskammern auf. Dabei wird jede der Teilmengen der Probe auf eine der Reaktionskammern verteilt. Auch weist das Verfahren 600 einen Schritt 620 des Herausfilterns von Zielzellen aus der Probe mittels der Filter der Reaktionskammern auf. Ferner weist das Verfahren 600 einen Schritt 630 des Durchführens einer Reaktion zwischen einer für jede der Reaktionskammern unterschiedlichen, zielzellenbezogenen Wirksubstanz und den Zielzellen der Probe in jeder der Reaktionskammern auf, um in jeder der Reaktionskammern ein Ergebnis der Reaktion zwischen der Wirksubstanz und den Zielzellen der Probe erfassbar zu machen.

Optional kann das Verfahren 600 vor dem Schritt 620 des Herausfilterns einen Schritt des Aufschließens bzw. Lysierens der Probe aufweisen, sodass die Zielzellen intakt bleiben. Gemäß einem Ausführungsbeispiel werden der Schritt 610 des Aufteilens, der Schritt 620 des Herausfilterns und zusätzlich oder alternativ der Schritt 630 des Durchführens durch Ansteuern von Fluidleitmitteln ausgeführt. Dabei weisen Fluidleitmittel Schnittstellen auf, die ausgebildet sind, um Ansteuersignale zu empfangen. Im Schritt 610 des Aufteilens und im Schritt 620 des Herausfilterns wird hierbei die Probe mittels der Fluidleitmittel innerhalb der mikrofluidischen Vorrichtung gefördert. Im Schritt 630 des Durchführens werden dabei die Wirksubstanzen mittels der Fluidleitmittel in die Reaktionskammern gefördert.

Im Folgenden werden Charakteristika von Ausführungsbeispielen der vorliegenden Erfindung unter Bezugnahme auf die Figuren 1 bis 6 zusammenfassend und mit anderen Worten erläutert.

Ein Antibiogramm bezeichnet einen Labortest zur Bestimmung einer Empfindlichkeit bzw. Resistenz von Krankheitskeimen, die hierbei die Zielzellen repräsentieren, gegenüber Antibiotika als Wirksubstanzen. Prinzipiell ist ein Antibiogramm vor einer Verabreichung eines Antibiotikums empfehlenswert. Es wird dabei im Rahmen einer phänotypischen Bestimmung beispielsweise eine Wachstumsrate von Bakterien in Anwesenheit eines Nährmediums und bestimmter Antibiotika gemessen. Diesem Ansatz stehen In-vitro-Methoden zur Erstellung genetischer Profile von Bakterien gegenüber, auch genotypische Bestimmung genannt. Letztere Methoden können darunter leiden, dass nur wenige genetische Profile bzw. Merkmale von Antibiotika-resistenten Bakterien bekannt sind. Beispiele für eine bekannte Antibiotikaresistenz sind unter anderem das mecA-Gen oder das nptll-Gen. Durch verstärkten Einsatz von Breitbandantibiotika ohne vorherigen Wirksamkeitstest entstehen ständig neue Antibiotikaresistenzen, weshalb eine alleinige genotypische Bestimmung nicht zukunftssicher ist. Eine phänotypische Bestimmung, wie sie unter Verwendung von Ausführungsbeispielen der vorliegenden Erfindung ermöglicht wird, kann hier Abhilfe schaffen.

Beispielhafte Abmessungen von mikrofluidischen Vorrichtungen 100 bzw. 200 gemäß Ausführungsbeispielen der vorliegenden Erfindung umfassen beispielsweise eine Dicke der mikrofluidischen Vorrichtung 100 bzw. 200 von 0,5 Millimeter bis 5 Millimeter, einen Durchmesser der Kanäle 110, 130, 150 und 180 von 10 Mikrometer bis 3 Millimeter, ein Volumen der Kammern 120, 140, 160 und 170 von 1 Kubikmillimeter bis 1000 Kubikmillimeter, eine Porengröße der Filter 340 von 0,05 Mikrometer bis 50 Mikrometer und eine Anzahl an vorgelagerten Wirksubstanzen 245 bzw. Antibiotika von 1 bis 100. Dabei kann eine Vorlagerung der Antibiotika als Wirksubstanzen 245 in flüssiger oder fester Form, beispielsweise in Form von mit Antibiotika getränkten und eingetrockneten Filterdisks, erfolgen. Das Herausfiltern 620 von Begleitzellen bzw. zielzellenfreien Probenanteilen bzw. ein Fixieren von ausschließlich Zielzellen, hier beispielsweise von ausschließlich Bakterien, auf dem Filter 340 erfolgt insbesondere durch vorheriges Herausfiltern von Begleitzellen, beispielsweise humanen Zellen, durch einen vorgeschalteten Filter oder durch Entfernen von Begleitzellen durch selektive Lyse. Als Filter 340 können sogenannte Transmissionselektronenmikroskop-Grids bzw. TEM-Grids, sogenannte Tracketched Filter, lithografisch hergestellte Filter, HEPA-Bakterienfilter, MembranFilter, Gewebefilter oder dergleichen eingesetzt werden. Ein Erfassen bzw. Messen eines Bakterienwachstums kann mittels optischer Überwachung beispielsweise mittels eines Mikroskops, mittels Impedanzmessung über auf dem Filter 340 angebrachte Elektroden, unter Verwendung von Vitalitätsfarbstoffen, wie beispielsweise almarBlue, PrestoBlue, LIVE/DEAD BacLight, Microbial Viability Assay Kit-WST, etc., oder dergleichen erfolgen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Mikrofluidische Vorrichtung (100; 200) zum Analysieren einer Probe biologischen Materials, wobei die mikrofluidische Vorrichtung (100; 200) folgende Merkmale aufweist:
Fluidleitmittel (110, 115, 120, 130, 135, 150, 155, 160, 180, 185), die ausgebildet sind, um eine in die mikrofluidische Vorrichtung (100; 200) eingebrachte Probe in eine Mehrzahl von Teilmengen aufzuteilen; und
eine Mehrzahl von Reaktionskammern (140), die mit den Fluidleitmitteln (110, 115, 120, 130, 135, 150, 155, 160, 180, 185) fluidisch verbunden sind, wobei jede der Reaktionskammern (140) einen Filter (340) zum Herausfiltern von Zielzellen (345) aus der Probe aufweist, wobei jede der Reaktionskammern (140) ausgebildet ist, um eine Teilmenge der Probe aufzunehmen, wobei in jeder der Reaktionskammern (140) ein Ergebnis einer Reaktion zwischen einer für jede der Reaktionskammern (140) unterschiedlichen, zielzellenbezogenen Wirksubstanz (245) und den Zielzellen (345) der aufgenommenen Teilmenge der Probe erfassbar ist.

2. Mikrofluidische Vorrichtung (200) gemäß Anspruch 1, bei der in jeder der Reaktionskammern (140) eine unterschiedliche Wirksubstanz (245) vorlegbar oder vorgelegt ist.

3. Mikrofluidische Vorrichtung (100) gemäß gemäß einem der vorangegangenen Ansprüche, mit einer Mehrzahl von Speicherkammern (170) zum Speichern unterschiedlicher Wirksubstanzen, wobei die Speicherkammern (170) fluidisch mittels der Fluidleitmittel (110, 115, 120, 130, 135, 150, 155, 160, 180, 185) mit der Mehrzahl von Reaktionskammern (140) verbunden sind, wobei die Fluidleitmittel (110, 115, 120, 130, 135, 150, 155, 160, 180, 185) ausgebildet sind, um in jede der Reaktionskammern (140) eine der unterschiedlichen Wirksubstanzen aus den Speicherkammern (170) einzuleiten.

4. Mikrofluidische Vorrichtung (100) gemäß Anspruch 3, bei der die Fluidleitmittel (110, 115, 120, 130, 135, 150, 155, 160, 180, 185) eine Mehrzahl von Sammelkanälen (180) und eine Mehrzahl von Zufuhrventilen (185) aufweisen, wobei jede der Speicherkammern (170) mittels eines Sammelkanals (180) fluidisch mit der Mehrzahl von Reaktionskammern (140) verbunden ist, wobei in jedem Sammelkanal (180) ein Zufuhrventil (185) angeordnet ist.

5. Mikrofluidische Vorrichtung (100; 200) gemäß einem der vorangegangenen Ansprüche, bei der die Fluidleitmittel (110, 115, 120, 130, 135, 150, 155, 160, 180, 185) einen Probeneinlasskanal (110) mit einem Einlassventil (115), eine Pumpkammer (100), eine Mehrzahl von Verteilkanälen (130) mit einer Mehrzahl von ersten Pumpventilen (135), eine Mehrzahl von Abfuhrkanälen (150) mit einer Mehrzahl von zweiten Pumpventilen (155) und eine Abfallkammer (160) aufweisen, wobei der Probeneinlasskanal (110) fluidisch mit der Pumpkammer (120) verbunden ist, wobei die Pumpkammer (120) und die Reaktionskammern (140) mittels der Mehrzahl von Verteilkanälen (130) fluidisch miteinander verbunden sind, wobei die Reaktionskammern (140) und die Abfallkammer (160) mittels der Mehrzahl von Abfuhrkanälen (150) fluidisch miteinander verbunden sind.

6. Mikrofluidische Vorrichtung (100; 200) gemäß einem der vorangegangenen Ansprüche, bei der jede der Reaktionskammern (140) ausgebildet ist, um das Ergebnis der Reaktion zwischen der Wirksubstanz (245) und den Zielzellen (345) der aufgenommenen Teilmenge der Probe optisch und/oder elektrisch erfassbar zu machen.

7. Verfahren (600) zum Analysieren einer Probe biologischen Materials, wobei das Verfahren (600) in Verbindung mit einer mikrofluidischen Vorrichtung (100; 200) ausführbar ist, die Fluidleitmittel (110, 115, 120, 130, 135, 150, 155, 160, 180, 185) und eine Mehrzahl von fluidisch mit den Fluidleitmitteln (110, 115, 120, 130, 135, 150, 155, 160, 180, 185) verbundene Reaktionskammern (140) mit Filtern (340) aufweist, wobei das Verfahren (600) folgende Schritte aufweist:
Aufteilen (610) einer in die mikrofluidische Vorrichtung (100; 200) eingebrachten Probe in eine Mehrzahl von Teilmengen mittels der Fluidleitmittel (110, 115, 120, 130, 135, 150, 155, 160, 180, 185) auf die Mehrzahl von Reaktionskammern (140), wobei jede der Teilmengen der Probe auf eine der Reaktionskammern (140) verteilt wird;
Herausfiltern (620) von Zielzellen (345) aus der Probe mittels der Filter (340) der Reaktionskammern (140); und
Durchführen (630) einer Reaktion zwischen einer für jede der Reaktionskammern (140) unterschiedlichen, zielzellenbezogenen Wirksubstanz (245) und den Zielzellen (345) der Probe in jeder der Reaktionskammern (140), um in jeder der Reaktionskammern (140) ein Ergebnis der Reaktion zwischen der Wirksubstanz (245) und den Zielzellen (345) der Probe erfassbar zu machen.

8. Vorrichtung, die ausgebildet ist, um alle Schritte eines Verfahrens (600) gemäß Anspruch 7 durchzuführen.

9. Computerprogramm, das dazu eingerichtet ist, alle Schritte eines Verfahrens (600) gemäß Anspruch 7 durchzuführen.

10. Maschinenlesbares Speichermedium mit einem darauf gespeicherten Computerprogramm nach Anspruch 9.
